# EUROPÄISCHE PATENTANMELDUNG

(11) **EP 3 078 864 A1**
(43) Veröffentlichungstag der Anmeldung: **12.10.2016**
(21) Anmeldenummer: 16163562.8
(22) Anmeldetag: 01.04.2016
(51) Int. Cl.: F16B 12/26, F16B 12/46

(54) **MÖBELKORPUS**

(30) Priorität: 10.04.2015 DE 102015004686
(71) Anmelder: Ed. Heckewerth Nachf. GmbH & Co. KG, 32120 Hiddenhausen (DE); Paul Henke GmbH & Co. KG, 32584 Löhne (DE)
(72) Erfinder: Görgens, Josef, 56637 Plaidt (DE)
(74) Vertreter: Thielking & Elbertzhagen Patentanwälte Partnerschaft mbB

(57) **Zusammenfassung**

Der Möbelkorpus weist wenigstens zwei auf Gehrung verbundene, tragende Plattenelemente (1, 2) auf, an deren einander zugewandten, auf Gehrung verbundenen Stirnseiten jeweils wenigstens ein Verbindungselement (14, 24) vorgesehen ist. Die jeweiligen Verbindungselemente (14, 24) sind im Bereich der jeweiligen Stirnseite angebracht oder bilden einen Teil der Stirnseite. Der Möbelkorpus weist weiter ein mit den Verbindungselementen (14, 24) kraft- und/oder formschlüssig verbundenes Kopplungselement (5) auf, welches die tragenden Plattenelemente (1, 2) auf Gehrung zusammenhält.

## Beschreibung

Die Erfindung betrifft einen Möbelkorpus nach dem Oberbegriff des Anspruchs 1.

Ein gattungsgemäßer Möbelkorpus ist das Modell "VALJE" des Möbelanbieters IKEA. Dieser weist auf Gehrung miteinander verbundene tragende Plattenelemente auf. Dazu sind an den Stirnseiten der miteinander auf Gehrung verbundenen Plattenelemente an einem Plattenelement vorspringende Stifte mit verbreitertem Kopf und an dem damit zu verbindenden Plattenelement entsprechende schlüssellochförmige Aussparungen vorgesehen. Zur Montage zweier Plattenelemente werden die Plattenelemente entlang ihrer Gehrungsflächen versetzt aneinander gefügt, so dass die verbreiterten Köpfe der Vorsprünge in die breiteren Bereiche der schlüssellochförmigen Aussparungen eintauchen können. Sodann werden die beiden Plattenelemente gegeneinander verschoben, so dass die verbreiterten Köpfe den schmaleren Teil der Aussparungen hintergreifen. Auf diese Weise werden zwei Plattenelemente miteinander verbunden.

Diese Konstruktion hat eine Vielzahl von Nachteilen. Zum Einen kann die Konstruktion nicht mit beliebigem Holzwerkstoff hergestellt werden, da die Köpfe und Vorsprünge wie auch die sie haltenden Aussparungen eine gewisse Stabilität benötigen, denn sie sollen ja tragende Verbindungen bilden. Dazu wird bei der bekannten Lösung die eigentliche Platte mit einem diese umlaufenden Verstärkungsrahmen aus Massivholz umgeben, in dem die Aussparungen bzw. Vorsprünge vorgesehen werden. Dies macht die zu verwendenden Plattenelemente vergleichsweise teuer.

Die Vorsprünge weisen zudem den Nachteil auf, dass sie aus der Gehrungsfläche so weit herausragen, das die Stapelbarkeit der Plattenelemente im zerlegten Zustand nicht oder nur eingeschränkt gegeben ist. In diesem Zustand gibt es Kontakt zwischen den Flächen der Plattenelemente und den Vorsprüngen, so dass letztere abbrechen können.

Die bekannte Konstruktion eignet sich auch nicht für ein häufiges Zerlegen, wobei vor allem der Abbau problematisch ist. Zum Einen ist ein hoher Kraftaufwand nötig, um die beiden verbundenen Plattenelemente gegeneinander in die Nichteingriffsstellung zu bewegen. Zum Anderen kann man dem zusammengebauten Möbelkorpus nicht ansehen, in welche Richtung die beiden Teile gegeneinander verschoben werden müssen, um die Nichteingriffsstellung zu erreichen. Dies birgt die Gefahr, dass beim Zerlegen des Möbels unter Kraftausübung irrtümlich die falsche Verschieberichtung gewählt wird und so Vorsprünge abbrechen können und das Möbel fortan nicht mehr zu gebrauchen ist.

Schließlich weist die Konstruktion einen Nachteil im Hinblick auf eine in Nuten in den Plattenelementen einzubringende Rückwand auf. Da die Einschubrichtung der Rückwand in die Nut senkrecht zur Innenseite der Plattenelemente liegt, die Plattenelemente aneinander aber durch eine Relativbewegung senkrecht zur Rückwand zu verbinden sind, muss die Rückwand kleiner ausgebildet werden als die Nuttiefen dies eigentlich zulassen. Das bedeutet, dass im fertig montierten Zustand immer an einer Seite des Möbelkorpus ein Spalt zwischen der Innenseite des Plattenelements und der Schmalseite der Rückwand entsteht. Die bekannte Einrichtung behilft sich mit der Anbringung zusätzlicher Halterungen für die Rückwand auf der Rückseite des Möbels, um die Rückwand so zu zentrieren und zentriert zu halten, dass die Spalte nicht gebildet werden. Diese Vorgehensweise ist umständlich und erfordert zusätzliche Montagemittel zur Fixierung der Rückwand und infolge dessen zusätzlichen Montageaufwand. Zudem sind diese Montagemittel sichtbar, so dass sich diese Konstruktion nicht für die freie Aufstellung im Raum eignet.

Aus US 4,701,066 A ist ein Gehrungsverbinder für eine Möbelverkleidung bekannt, mit denen Verkleidungspaneele als Schallschutz um einen Korpus herum angeordnet werden können. Die Verbindung eignet sich aber nicht für tragende Bauteile und erlaubt auch keine Demontage.

Aufgabe der vorliegenden Erfindung ist es, einen gattungsgemäßen Möbelkorpus der eingangs genannten Art anzugeben, der die oben erwähnten Nachteile beseitigt.

Gelöst wird diese Aufgabe durch einen Möbelkorpus mit den Merkmalen des Anspruchs 1. Vorteilhafte Ausführungsformen finden sich in den Unteransprüchen.

Der erfindungsgemäße Möbelkorpus weist wenigstens zwei auf Gehrung verbundene tragende Plattenelemente auf, an deren einander zugewandten, auf Gehrung verbundenen Stirnseiten jeweils wenigstens ein Verbindungselement vorgesehen ist. Die jeweiligen Verbindungselemente sind im Bereich der jeweiligen Stirnseite angebracht oder bilden einen Teil der Stirnseite. Mit den Verbindungselementen ist kraft- und/oder formschlüssig ein Kopplungselement verbunden. Durch dieses Kopplungselement werden die tragenden Plattenelemente auf Gehrung zusammengehalten. Durch den Einsatz dieses Kopplungselements ist eine Verbindung zweier Plattenteile stark vereinfacht, weil nun lediglich mit Druckausübung senkrecht zur Außenfläche eines Plattenelements eine Verbindung hergestellt werden kann. Ein relatives Verschieben zweiter Plattenelemente entlang der Gehrungsflächen entfällt. Hierdurch wird die Montage bereits stark vereinfacht. In derselben Richtung können aber so auch die Plattenelemente voneinander getrennt werden, indem eine Kraft, z.B. ein Schlag mit der Hand, gegen die Innenseite eines Plattenelementes erfolgt. Dies gelingt immer und eine Zerstörung von Verbindungselementen ist dabei ausgeschlossen, weil die Kraft, die erforderlich ist, um das Kopplungselement vom jeweiligen Verbindungselement zu lösen, immer geringer ist als die Kraft, mit der das Verbindungselement am jeweiligen Plattenelement gehalten wird.

Zur Erzielung einer hinreichenden Haltekraft kann insbesondere vorgesehen sein, dass die Verbindungselemente jeweils einen Harpunensteg aufweisen, welcher mit den Stirnseiten der zugehörigen tragenden Plattenelemente verbunden ist. Auf diese Weise kann ein Ausreißen des Verbindungselements beim Demontagevorgang praktisch ausgeschlossen werden. Weiter oder ergänzend können die Verbindungselemente in Nuten in den tragenden Plattenelementen versenkt sein. Dies schafft eine größere Kontaktfläche zwischen den Verbindungselementen und den Plattenelementen und damit potenziell eine größere Haltekraft.

Für die Verbindung mit den bevorzugt als Extrusionsprofile ausgebildeten Verbindungselementen ist bevorzugt vorgesehen, dass das Kopplungselement eine Mehrzahl Rastvorsprünge zum Einrasten in einer Aufnahme der Verbindungselemente aufweist. Durch diese Schnappverbindung ist eine besonders leichte Montage möglich, indem das Kopplungselement auf ein Verbindungselement aufgesetzt und durch Druck mit diesem verbunden wird.

Vorteilhaft kann dazu vorgesehen sein, dass die Rastvorsprünge des Kopplungselements als Paare von zueinander beabstandeten Rastzungen ausgebildet sind. Dadurch kann je nach Stärke und Material der Rastzungen die gewünschte Haltekraft zwischen Kopplungselement und Verbindungselement vorgegeben werden, damit eine saubere Montage und eine schadensfreie Demontage möglich ist. Für einen besseren Halt in der Aufnahme der Verbindungselemente kann zudem vorgesehen sein, dass die Rastzungen in ihrem Endbereich einen insbesondere eine Ausbauchung aufweisenden Abschnitt der Verbindungselemente hintergreifende Rastnasen aufweisen.

Die Verbindungselemente weisen bevorzugt eine Aufnahme für das Kopplungselement bildende Rastschenkel auf. Mit diesen Rastschenkeln kann als Gegenstück zu den Zungen beim Kopplungselement die Flexibilität optimiert werden, so dass sie besonders gut hält, aber auch (ggf. mehrfach) demontiert werden kann, ohne dass die Verbindung bei der Wiedermontage sich verschlechtert. Dazu kann vorgesehen sein, dass die Rastschenkel zur Aufnahme hin eine Ausbauchung aufweisen. Diese Ausbauchung kann mit den Rastnasen des Kopplungselements einen Formschluss bilden, um die Verbindung zwischen Kopplungselement und Verbindungselement und damit die komplette Gehrungsverbindung der Plattenelemente möglichst spielfrei zu halten.

Zusätzlich zu den Rastvorsprüngen kann das Kopplungselement wenigstens ein Zentrierelement aufweisen, dessen maximale Breite im Wesentlichen der Minimalbreite der Aufnahme der Verbindungselemente entspricht. Hierdurch wird eine spielfreie Aufnahme des Kopplungselements in der Aufnahme des Verbindungselements erreicht und ein falsches Ansetzen, welches zu einer Fehlbedienung führen kann, wird durch diese Maßnahme weitgehend vermieden.

Bevorzugt ist vorgesehen, dass die Fügerichtung zwischen dem Kopplungselement und dem Verbindungselement parallel zu der Ebene liegt, die durch die Innen- oder Außenseite des jeweiligen, das Verbindungselement aufnehmenden tragenden Plattenelements definiert ist. Auf diese Weise kann unabhängig vom Gehrungswinkel eine Montage und Demontage von Plattenelementen immer durch Kraftausübung senkrecht zu deren Innen- oder Außenseiten erfolgen. Das bedeutet eine Erleichterung der Montage und Demontage, da die Innen- und Außenseiten der Plattenelemente durch Anlage oder Schlagen mit der Hand besonders einfach zugänglich sind.

Die Erfindung wird nachfolgend anhand des in den Figuren 1 bis 5 gezeigten Ausführungsbeispiels näher erläutert.
Figur 1 zeigt eine perspektivische Darstellung zweier zu verbindender Plattenelemente und eines erfindungsgemäßen Kopplungselements.
Figur 2 zeigt einen Schnitt durch ein Verbindungselement.
Figur 3 zeigt einen Schnitt durch ein erfindungsgemäßes Plattenelement.
Figur 4 zeigt einen Schnitt durch zwei mit einem Kopplungselement verbundene Plattenelemente.
Figur 5 zeigt den Bereich der Verbindung aus Figur 4 in vergrößerter Darstellung.

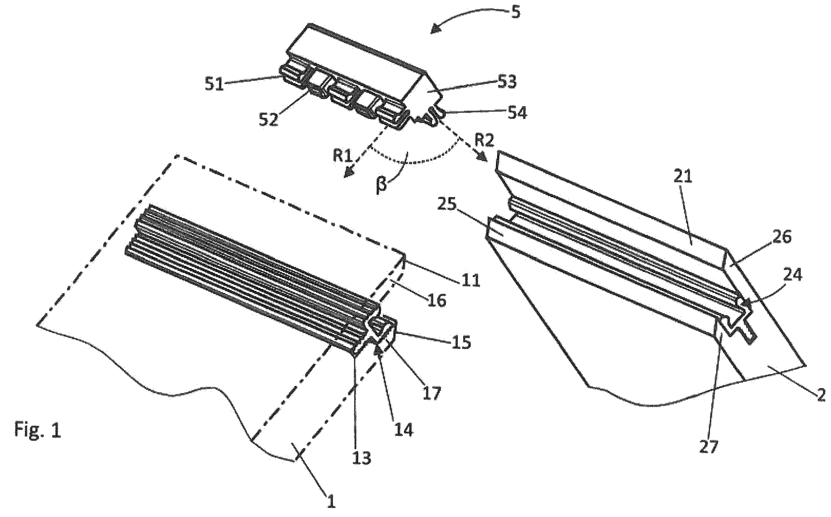

In den Figuren 1, 2 und 3 sind die wesentlichen Komponenten des erfindungsgemäßen Möbelkorpus dargestellt. Dieser wird aus einer Mehrzahl Plattenelemente 1, 2 gebildet, die Gehrungsflächen 11, 21 bzw. 15, 25 aufweisen, mit denen jeweils benachbarte Plattenelemente 1, 2, aneinander gefügt werden. Die Plattenelemente 1, 2, bestehen im Wesentlichen aus Holz oder einen Holzwerkstoff, z.B. einer Span- oder MDF-Platte. Die Gehrungsflächen 11, 15, 21, 25 weisen einen Gehrungswinkel α auf, der bevorzugt 45° zur Flächennormalen N zur Außenseite 18, 28 oder der Innenseite 19, 29 der Plattenelemente 1, 2 beträgt. Die Verbindung kann aber auch für andere Gehrungswinkel realisiert werden.

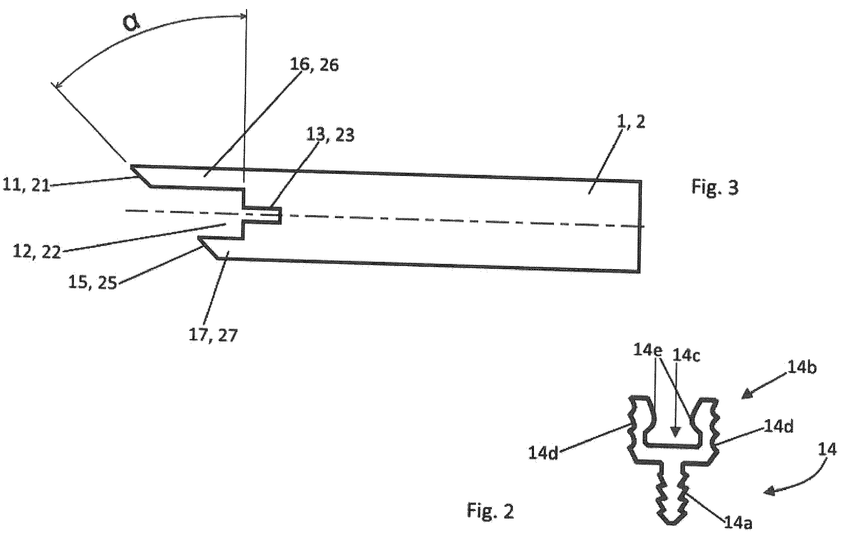

Wie insbesondere in Figur 3 gezeigt, weisen die Plattenelemente 1, 2 in ihrer die Gehrungsfläche 11, 15 bzw. 21, 25 aufweisenden Stirnseite eine Nut 12 bzw. 22 auf, in die ein Verbindungselement 14, 24 in die Stirnseite eingelassen ist. Die Nut 12, 22 erstreckt sich bevorzugt über die komplette Stirnseite des Plattenelements 1, 2 und teilt das Ende der den Gehrungsschnitt aufweisenden Stirnseite in zwei Schenkel, 16, 17 bzw. 26, 27. In dem Boden der Nut 12, 22 kann eine Vertiefung 13, 23 zur Aufnahme eines Harpunensteges (Pos. 14a in Figur 2) ausgebildet sein.

Das Verbindungselement 14, bzw. 24, welches als Element 14 in Figur 2 in Schnittdarstellung dargestellt ist, ist bevorzugt ein Extrusionsprofil, insbesondere aus Kunststoff. Dieses ist im Wesentlichen U- oder C-förmig, 14b, und weist einen Aufnahmebereich 14c zur Aufnahme eines unten noch zu beschreibenden Kopplungselements 5 auf. Die Aufnahme weist zwei Schenkel 14d auf, die eine zum Aufnahmebereich 14c hin ausbauchende Wölbung 14e aufweisen oder zum Aufnahmebereich 14c hin vorspringen.

Wie in Figur 1 gezeigt, werden die beiden fest in den Plattenelementen 1, 2 verankerten Verbindungselemente 14, 24 über ein Kopplungselement 5 miteinander verbunden. Dieses Kopplungselement 5 weist Rastvorsprünge 51, 54 auf, und zwar erste Rastvorsprünge, die zur Aufnahme in das Verbindungselement 14 des einen Plattenelements 1 ausgelegt sind und zweite Rastvorsprünge 54, die zur Aufnahme durch das Verbindungselement 24 des anderen Plattenelements 2 ausgelegt sind. Die Haupterstreckungsrichtungen R1 bzw. R2 dieser Vorsprünge 51, 54, die von einem Grundkörper 53 des Kopplungselements 5 aus vorstehen, bilden entsprechend bei einem Gehrungswinkel α einen Öffnungswinkel von β = 180°-2α aus.

In denselben Richtungen wie die Rastvorsprünge 51, 54 stehen Zentrierelemente 52 vor, deren Breite in etwa der Breite der Aufnahme 14c in den Verbindungselementen 14, 24 entspricht und die bevorzugt in der Richtung R1 zwischen oder neben den Rastelementen 51, bzw. in der Richtung R2 zwischen oder neben den Rastelementen 54 angeordnet sind. Die Zentrierelemente 52 können insbesondere als Zentrier-Stege am Profil bzw. dem Grundkörper 53 des Kopplungselementes 5 vorgesehen sein. Sie dienen der gleichmäßigen Belastung und gleichmäßigen Wirkung der Rastvorsprünge 51, 54 in den Verbindungselementen 14, 24.

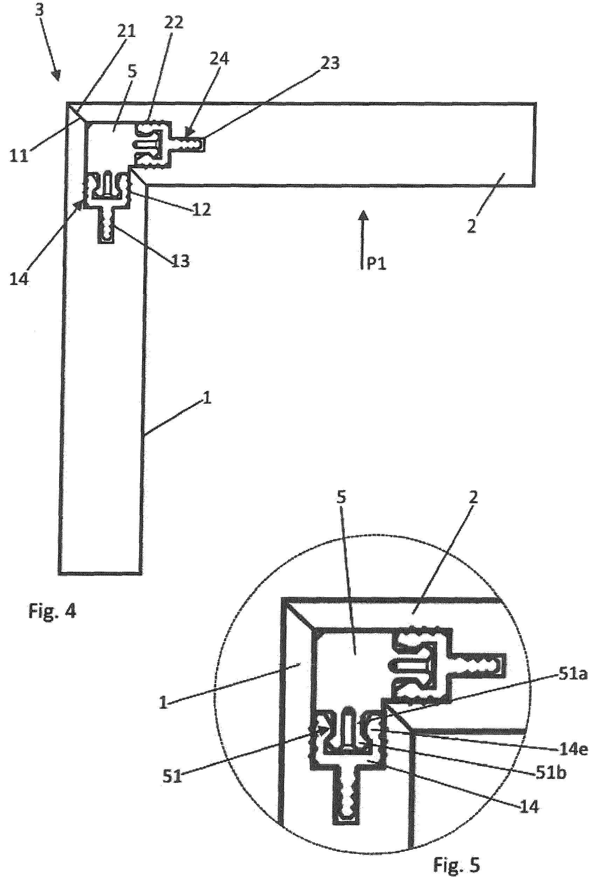

Wie in den Figuren 4 und 5 dargestellt, sind die Rastvorsprünge 51, 54 jeweils durch paarweise angeordnete, in Richtung R1, R2 sich erstreckende Rastzungen 51a gebildet. Diese Rastzungen 51a weisen zwischen sich einen Freiraum auf, so dass sie flexibel sind und sich beim Einbringen in die Aufnahme 14c des Verbindungselements 14 aufeinander zu komprimieren lassen. Weiter sind an den Rastzungen 51a Rastnasen 51b vorgesehen, welche zu den als Schenkel ausgebildeten Seitenwänden des Verbindungselements 14 hin aus den Rastzungen 51a vorstehen. Die Rastnasen 51b hintergreifen die zum Innern der Aufnahme der Verbindungselemente 14 gerichteten Vorsprünge 14e, so dass eine Rastverbindung zwischen Kopplungselement 5 und den Verbindungselementen 14 entsteht. Diese Rastverbindung bildet so neben dem durch die Verrastung entstehenden Kraftschluss auch einen Formschluss zwischen den Rastvorsprüngen 51, 54 und den Verbindungselementen 14. Auf diese Weise wird eine sichere und spielfreie Verbindung geschaffen, auch dann, wenn das Korpusmöbel mehrfach demontiert wird.

Die Zusammensteckrichtung von Kopplungselement und Verbindungselement liegt immer in der Ebene parallel zur Innenseite bzw. Außenseite der Plattenelemente 1, 2 und auch senkrecht zur Haupterstreckungsrichtung der Nuten 12, 22 bzw. Extrusionsrichtung der die Verbindungselemente 14, 24 bildenden Profile. Folglich kann das Lösen dieser Verbindung dadurch erfolgen, eine Kraft normal zur Innenseite eines 2 der Plattenelemente (angedeutet durch den Pfeil P1 in Figur 4) auszuüben. Durch Kraft wird die Verbindung zwischen Kopplungselement und im Fall des Pfeils P1, dem Verbindungselement 14 am Plattenelement 1 gelöst.

Mit der Erfindung wird eine Gehrungsverbindung für selbsttragende Möbel bereitgestellt. Durch die Verbindungsrichtung ist es möglich, zusätzlich eine Rückwand einzubauen, auch dann, wenn diese in eine in den Plattenelementen eingelassene Nut eingesetzt wird. Die Platte kann trotzdem auf Maß (Durchmesser der rückwärtigen Korpusöffnung plus 2-fache Nuttiefe) gefertigt sein, weitere Fixierhilfen zur Vermeidung von Spalten sind nicht erforderlich. Auf diese Weise sind auch keine nach außen sichtbaren Fixierhilfen mehr nötig, und das Möbel kann ohne optische Beeinträchtigungen auch im Raum aufgestellt werden.

Weiter ist das für die Verbindungselemente 14 verwendete Profil endlos durch Extrusion herstellbar, wodurch der Herstellungsprozess stark vereinfacht und flexibilisiert wird.

Der erfindungsgemäße Möbelkorpus benötigt zur Montage keine zusätzlichen Verschraubungen, insbesondere auch keine zusätzlichen Verklippungen im Kantenbereich mehr.

## Patentansprüche

1. Möbelkorpus, aufweisend wenigstens zwei auf Gehrung verbundene, tragende Plattenelemente (1, 2), an deren einander zugewandten, auf Gehrung verbundenen Stirnseiten jeweils wenigstens ein Verbindungselement (14, 24) vorgesehen ist, wobei die jeweiligen Verbindungselemente (14, 24) im Bereich der jeweiligen Stirnseite angebracht sind oder einen Teil der Stirnseite bilden
**dadurch gekennzeichnet,**
**dass** der Möbelkorpus weiter ein mit den Verbindungselementen (14, 24) kraft- und/oder formschlüssig verbundenes Kopplungselement (5) aufweist, welches die tragenden Plattenelemente (1, 2) auf Gehrung zusammenhält.

2. Möbelkorpus nach Anspruch 1,
**dadurch gekennzeichnet,**
**dass** das Kopplungselement (5) eine Mehrzahl Rastvorsprünge (51) zum Einrasten in einer Aufnahme (14c) der Verbindungselemente (14) aufweist.

3. Möbelkorpus nach Anspruch 2,
**dadurch gekennzeichnet,**
**dass** die Rastvorsprünge (51) des Kopplungselements (5) als Paare von zueinander beabstandeten Rastzungen (51a) ausgebildet sind.

4. Möbelkorpus nach Anspruch 3,
**dadurch gekennzeichnet,**
**dass** die Rastzungen (51a) in ihrem Endbereich einen, insbesondere eine Ausbauchung (14e) aufweisenden, Abschnitt der Verbindungselemente (14) hintergreifende Rastnasen (51b) aufweisen.

5. Möbelkorpus nach einem der Ansprüche 2 bis 4,
**dadurch gekennzeichnet,**
**dass** das Kopplungselement (5) zusätzlich zu den Rastvorsprüngen (51) wenigstens ein Zentrierelement (52) aufweist, dessen maximale Breite im Wesentlichen der Minimalbreite der Aufnahme (14c) der Verbindungselemente (14) entspricht.

6. Möbelkorpus nach einem der vorigen Ansprüche,
**dadurch gekennzeichnet,**
**dass** die Verbindungselemente (14) Extrusionsprofile sind.

7. Möbelkorpus nach einem der vorigen Ansprüche,
**dadurch gekennzeichnet,**
**dass** die Verbindungselemente (14) jeweils einen Harpunensteg (14a) aufweisen, welcher mit den Stirnseiten der zugehörigen tragenden Plattenelemente (1, 2) verbunden ist.

8. Möbelkorpus nach einem der vorigen Ansprüche,
**dadurch gekennzeichnet,**
**dass** die Verbindungselemente (14) in Nuten (12, 22) in den tragenden Plattenelementen (1, 2) versenkt sind.

9. Möbelkorpus nach einem der vorigen Ansprüche,
**dadurch gekennzeichnet,**
**dass** die Verbindungselemente (14) eine Aufnahme (14c) für das Kopplungselement (5) bildende Rastschenkel (14d) aufweisen.

10. Möbelkorpus nach Anspruch 7,
**dadurch gekennzeichnet,**
**dass** die Rastschenkel (14d) zur Aufnahme (14c) hin eine Ausbauchung (14e) aufweisen.

11. Möbelkorpus nach einem der vorigen Ansprüche,
**dadurch gekennzeichnet,**
**dass** die Fügerichtung zwischen dem Kopplungselement (5) und dem Verbindungselement (14) parallel zu der Ebene liegt, die durch die Innen- oder Außenseite des jeweiligen, das Verbindungselement (14) aufnehmenden tragenden Plattenelements (1, 2) definiert ist.
